# EUROPÄISCHE PATENTSCHRIFT

(11) **EP 4 018 603 B1**
(45) Veröffentlichungstag und Bekanntmachung des Hinweises auf die Patenterteilung: **11.10.2023**
(21) Anmeldenummer: 20761515.4
(22) Anmeldetag: 06.08.2020
(51) Int. Cl.: H04L 12/40

(54) **VERFAHREN ZUR POSITIONSERKENNUNG EINES BUSTEILNEHMERS**
METHOD FOR DETECTING THE POSITION OF AT LEAST ONE BUS SUBSCRIBER
PROCÉDÉ DE DÉTECTION DE LA POSITION D'AU MOINS UN ABONNÉ D'UN BUS

(30) Priorität: 20.08.2019 DE 102019212414
(43) Veröffentlichungstag der Anmeldung: 29.06.2022
(73) Patentinhaber: Continental Autonomous Mobility Germany GmbH, 85057 Ingolstadt (DE)
(72) Erfinder: SÄTTELE, Peter, 90411 Nürnberg (DE)
(74) Vertreter: Continental Corporation
(86) Internationale Anmeldenummer: PCT/DE2020/200067
(87) Internationale Veröffentlichungsnummer: WO 2021/032256

(56) Entgegenhaltungen:
- EP-A2- 1 198 094
- DE-A1-102005 055 964
- US-A- 5 339 022
- US-A1- 2003 128 039
- MONDAL ABIR J. ET AL: "Estimation of frequency and amplitude of ring oscillator built using current sources", AIN SHAMS ENGINEERING JOURNAL, vol. 11, no. 3, 1 September 2020 (2020-09-01), pages 677-686, XP093029158, AMSTERDAM, NL ISSN: 2090-4479, DOI: 10.1016/j.asej.2020.01.006

## Beschreibung

Die vorliegende Erfindung betrifft Verfahren zur Positionserkennung eines Busteilnehmers bzw. von Busteilnehmern und ein Bussystem, bei welchem die Positionserkennung des Busteilnehmers bzw. der Busteilnehmer insbesondere anhand eines erfindungsgemäßen Verfahrens erfolgt.

### Technologischer Hintergrund

Moderne Fortbewegungsmittel wie Kraftfahrzeuge oder Motorräder werden zunehmend mit Fahrerassistenzsystemen ausgerüstet, welche mit Hilfe von Sensorsystemen die Umgebung erfassen, Verkehrssituation erkennen und den Fahrer unterstützen, z. B. durch einen Brems- oder Lenkeingriff oder durch die Ausgabe einer optischen oder akustischen Warnung. Als Sensorsysteme zur Umgebungserfassung werden regelmäßig Ultraschallsensoren, Kamerasensoren, Surroundview-Kameras, Radarsensoren, Lidarsensoren oder dergleichen eingesetzt. Aus den durch die Sensoren ermittelten Sensordaten können anschließend Rückschlüsse auf die Umgebung gezogen werden, durch die Assistenzfunktionen zur Fahrerunterstützung bei Park- und/oder Fahrmanövern realisiert werden können.

Die Sensoren werden in der Regel über einen Bus bzw. ein Bussystem als Busteilnehmer an eine Steuervorrichtung oder eine Steuereinheit bzw. ein Steuergerät (Electronic Control Unit, ECU) angeschlossen, wobei unter einem Bus ein System zur Datenübertragung zwischen mehreren (Bus-) Teilnehmern über einen insbesondere gemeinsamen Übertragungsweg zu verstehen ist. Ferner ist beim Einbau bzw. der Installation der Busteilnehmer, z. B. mehrere Ultraschallsensoren oder Surroundview-Kameras, die Kenntnis der jeweiligen Busteilnehmer- bzw. Einbauposition für die gewünschte Assistenzfunktion von besonderer Bedeutung. Dementsprechend ist es notwendig, zu wissen, welcher Sensor an welcher Position im Fahrzeug angeordnet bzw. eingebaut ist. Die Erkennung oder Bestimmung der jeweiligen Einbauposition kann z. B. dadurch erfolgen, dass eine explizite Konfiguration (z. B. durch Endof-Line Programmierung, "DIP-Switches", etc.) erfolgt oder ein "Einlernen" durchgeführt wird (z. B. durch manuelles oder automatisiertes Aktivieren eines identifizierbaren Merkmales am Busteilnehmer, wobei dieses zu einem Zeitpunkt immer nur für einen Teilnehmer aktiviert sein darf). Die Explizite Konfiguration bzw. das Einlernen erfordern jedoch zusätzliche Konfigurationsschritte bei der Installation der Sensoren (im Fahrzeugbau typischerweise am Bandende oder im Servicefall), welche in der Regel nicht automatisch durch das System durchgeführt werden können. Daher ist diese Art der Positionserkennung nicht prozesssicher und bedeutet zusätzlichen Zeit- und Kostenaufwand. Ferner können schaltungstechnische Maßnahmen vorgenommen werden, wie die Codierung der Teilnehmerposition durch zusätzliche Adressinformationen am Einbauort (z. B. durch zusätzliche, nach Position unterschiedlich codierte Adresspins im Anschlussstecker) oder durch die Verdrahtung der Busleitung mit einer sogenannten "Daisy Chain", d. h. die Verbindung zum nachgelagerten Bussegment wird durch die Busteilnehmerschaltung "durchgeschleift" und kann durch die Schaltung des Busteilnehmers aktiv unterbrochen werden. Jedoch erfordert eine derartige Codierung durch die Anschlusskonfiguration einen zusätzlichen Aufwand an der Eingangsbeschaltung der Busteilnehmer. Zudem erfordert die unterschiedliche Beschaltung der Bus-Steckverbinder für die einzelnen Busteilnehmer einen erhöhten Fertigungsaufwand und ist zudem eine zusätzliche Fehlerquelle.

### Druckschriftlicher Stand der Technik

Aus dem Stand der Technik sind Drei-Draht Busse (Power, Bus, Ground) bzw. Bussysteme bekannt, bei denen es z. B. möglich ist, die Codierung durch eine Anschlusskonfiguration vorzunehmen. Beispielsweise ist aus der WO 2017/064280 A1 eine Autodetektionsvorrichtung zur Detektion eines Busteilnehmers bzw. Sensors innerhalb eines elektronischen Sensorsystems bekannt, wobei es sich bei dem Sensorsystem um ein Parksensorsystem mit Ultraschallsensoren handeln kann. Dabei können durch zyklisches Vertauschen der Anschlüsse am jeweiligen Busteilnehmer bis zu 6 unterschiedliche Konfigurationen unterstützt und erkannt werden.

Aus EP 1 198 094 A2 ist ein Verfahren zur Ermittlung der Bustopologie eines Bussystems gemäß dem Oberbegriff von Anspruch 1 bekannt. Das Bussystem weist dabei eine Anzahl von an eine Busleitung angeschlossenen Busteilnehmern auf, wobei das Verfahren eine Bestimmung der Anordnung von Busteilnehmern an einem Bussegment ermöglicht. Zur Topologieermittlung wird dem Busteilnehmer oder den Busteilnehmern des Bussegmentes über die Busleitung ein Aufforderungssignal zum Senden eines Antwortsignals übermittelt. Während der Übermittlung des Antwortsignals wird ein Messsignal über die Busleitung gesendet, das vom antwortenden Busteilnehmer reflektiert wird. Dabei wird aus der Zeitspanne zwischen dem Senden des Messsignals und dem Eintreffen des Reflexionssignals vom antwortenden Busteilnehmer dessen relative Position entlang der Busleitung und damit innerhalb des Bussegmentes bestimmt.

Das Dokument US 2003/128039 A1 offenbart ein Verfahren zur Messung der Länge eines elektrischen Kabels von einem seiner Enden aus. Die Enden eines Leiterpaares werden dabei derart ausgewählt, dass sie als Kontakte für einen Testkondensator dienen. Ein Referenzkondensator mit bekanntem Kapazitätswert und der Testkondensator werden dann abwechselnd in einen Oszillatorkreis eingefügt, während die Oszillatorfrequenz gemessen wird. Die Oszillatorfrequenzen werden danach verglichen, um ein Verhältnis zu erhalten, das dann mathematisch mit einer Zahl kombiniert wird, die die Kapazität pro Längeneinheit des Kabels angibt, so dass eine Ausgangszahl entsteht, die die Kabellänge darstellt. Ferner offenbart auch US 5 339 022 A eine Anordnung zur Messung der Länge eines Kabels, bei der nur ein Ende des Kabels zugänglich sein muss.

Aus der DE 10 2005 055 964 A1 ist Verfahren zum Betreiben eines Sensorsystems eines Kraftfahrzeugs bekannt, bei dem mehrere Sensormodule an ein gemeinsames Bussystem angeschlossen sind und zur Bestimmung einer Kabellänge bzw. des Abstandes der Sensormodule eine Messung der Phasendifferenz zwischen einem in den Stromkreis eingespeisten Impuls und einem reflektierten Impuls erfolgt.

Ferner beschreiben Mondal Abir J. ET AL in "Estimation of frequency and amplitude of ring oscillator built using current sources" (Ain Shams Engineering Journal, Bd. 11, Nr. 3, 1. September 2020 (2020-09-01), Seiten 677-686, XP093029158, AMSTERDAM, NL, ISSN: 2090-4479, DOI: 10.1016/j.asej.2020.01 .006), dass die Frequenz eines Ringoszillators mit der angeschlossenen Last einer an den Oszillator angeschlossenen Last variiert.

### Aufgabe der vorliegenden Erfindung

Die Aufgabe der vorliegenden Erfindung besteht darin, ein Verfahren sowie eine Vorrichtung zur Positionserkennung der Busteilnehmer eines Bussystems zur Verfügung zu stellen, durch das die Positionserkennung in einfacher und kostengünstiger Weise ohne zusätzlichen Bauteilaufwand verbessert und die Nachteile aus dem Stand der Technik überwunden werden können.

### Lösung der Aufgabe

Die vorstehende Aufgabe wird durch die gesamte Lehre des Anspruchs 1 sowie der nebengeordneten Ansprüche gelöst. Zweckmäßige Ausgestaltungen der Erfindung sind in den Unteransprüchen beansprucht.

Bei dem erfindungsgemäßen Verfahren zur Positionserkennung eines Busteilnehmers eines Bussystems, ist mindestens eine Steuervorrichtung und mehrere Busteilnehmer vorgesehen. Die Busteilnehmer sind jeweils an einer zu erkennenden Position angeordnet und über mindestens eine Leitung mit der Steuervorrichtung verbunden, insbesondere eine Leitung zur Daten-, Signal-, Energie- und/oder Nachrichtenübertragung. Die Leitung zu dem jeweiligen Busteilnehmer weist dabei eine festlegbare Leitungslänge auf. Die Positionserkennung des jeweiligen Busteilnehmers erfolgt dann, indem die Steuervorrichtung mittels eines Oszillators bzw. einer Oszillatorschaltung ein Signal (Oszillatorsignal) bzw. einen Impuls über die Leitung an den jeweiligen Busteilnehmer sendet und der Busteilnehmer antwortet, d. h. der Oszillator der Steuervorrichtung koppelt ein Oszillatorsignal in das Bussystem ein, welches dann vom Busteilnehmer zurückgekoppelt wird. Dabei kann die Steuervorrichtung die Frequenz des Oszillators bzw. die Oszillatorfrequenz ermitteln, die wiederum entsprechend der Leitungslänge variiert, sodass ein Verhältnis von Frequenz und Leitungslänge zur Positionserkennung des jeweiligen Busteilnehmers herangezogen werden kann. Durch das erfindungsgemäße Verfahren wird somit eine neuartige, autonome Positionsermittlung für Busteilnehmer an einem insbesondere geteilten Bussystem ("shared medium") zur Verfügung gestellt, welche ohne manuelle Eingriffe oder zusätzliche Pins am Sensor oder eine aufwändige Beschaltung im Sensor realisiert werden kann. Dementsprechend wird nur ein geringer Hardwareaufwand benötigt, der z. B. in Sensor-/ECU-ASICs realisierbar ist. Zudem wird eine einfache Art der Busverdrahtung von Sensoren ermöglicht, wodurch Einzelleitungen vom Sensor zum Steuergerät hin eingespart werden können, wodurch wiederum ein wirtschaftlicher Vorteil beim Fahrzeugaufbau entsteht. Zudem können kleinere Steuergerätestecker (z. B. bei 12 Ultraschallsensoren 6 Leitungen statt 16 Leitungen) ermöglicht werden. Ferner ist die Anzahl an zu vermessenden Busteilnehmern nicht beschränkt.

Gemäß einer bevorzugten Ausgestaltung der vorliegenden Erfindung kann es sich bei dem Busteilnehmer um einen Sensor handeln, insbesondere um einen Ultraschallsensor. Beispielsweise können mehrere Ultraschallsensoren als Abstandssensoren in einem Fahrzeug eingesetzt werden, um einen Parkassistenten zu realisieren. Die Ultraschallsensoren werden hierbei verteilt im/am Fahrzeug angeordnet, um eine "Rundumsicht" zu gewährleisten. Über die verschiedenen Leitungslängen hin zu einer zentralen Steuervorrichtung (wie z. B. Electronic Control Unit ECU oder Automated Driving Control Unit ADCU) können dann die jeweiligen Einbaupositionen mittels des erfindungsgemäßen Verfahrens automatisch erkannt werden. Die Installation der Ultraschallsensoren wird dadurch erheblich vereinfacht, da diese beim Einbau nicht weiter gekennzeichnet werden müssen und sich das System im Nachhinein selbsttätig konfigurieren kann. Ferner können auch andere aus dem Stand der Technik bekannte Fahrzeugsensoren als Busteilnehmer vorgesehen sein, wie z. B. Radarsensor, Kamera, Lidarsensor oder dergleichen. Darüber hinaus kann das Verfahren bei allen Arten von "Shared Medium" Bus-Systemen angewendet werden, bei denen die angeschlossenen Busteilnehmer über ihre Position auf dem Bus identifiziert werden sollen, z. B. auch bei Airbag-Sensoren. Alternativ oder zusätzlich könnte als Busteilnehmer auch ein Aktor vorgesehen sein (z. B. bei vernetzten Leuchten oder dergleichen).

Zweckmäßigerweise können die Busteilnehmer jeweils festlegbare unterschiedliche Leitungslängen aufweisen. Dadurch kann die Positionserkennung in besonders einfacher Weise erfolgen. Alternativ können diese anhand (relativer) abschätzbarer Leitungslängen bestimmt oder über eine gemessene Signalstärke geschätzt werden. Die Leitungslängen müssen hierbei nicht absolut bestimmt werden, da das Verfahren auch anhand von relativen Leitungslängen durchgeführt werden kann (z. B. Sensor 1 hat die größte Leitungslänge, Sensor 2 die zweitgrößte Leitungslänge usw.).

Vorzugsweise kann es sich bei dem Oszillator um einen Ringoszillator handeln, der selbständig anschwingen kann und keine Blindwiderstandskomponenten wie Kondensatoren oder Induktivitäten benötigt. Der Ringoszillator kann als geschlossene Reihenschaltung mit einer ungeraden oder gerade Anzahl an Invertern ausgestaltet sein, wobei eine Ausgestaltung mit ungerader Anzahl an Invertern keinen bzw. nur sehr geringen stabilen Zustand aufweist. Demgegenüber kann mittels einer geraden Anzahl an Invertern ein sogenannter Flipflop ("RS-Flipflop") mit zwei stabilen Zuständen des Ausgangssignals erzeugt werden.

Zweckmäßigerweise kann die Steuervorrichtung eine Frequenzmesseinrichtung mit einer Zählerschaltung und einer Torschaltung zum Bestimmen der Frequenz des Oszillators umfassen.

Gemäß einer vorteilhaften Ausgestaltung der Erfindung weisen die Steuervorrichtung und der Busteilnehmer jeweils eine Einrichtung zum Buszugriff bzw. einen Bustransceiver zum Einkoppeln bzw. Zurückkoppeln des Signals des Oszillators auf.

Erfindungsgemäß wird das Signal des Oszillators bzw. Oszillatorsignal mit der Versorgungsspannung des Busteilnehmers überlagert (z. B. auf einer Leitung) in das Bussystem eingekoppelt und über eine Signalleitung des Bussystems zurückgekoppelt.

Zweckmäßigerweise kann dabei die Steuervorrichtung und/oder der Busteilnehmer eine Schalteinrichtung aufweisen, mittels der entschieden werden kann, ob ein Einkoppeln bzw. Zurückkoppeln des Signals des Oszillators erfolgt oder nicht.

Der Busteilnehmer, dessen Position erkannt werden soll, kann in einen Zustand versetzt werden, in dem dessen Einbauposition erkannt werden kann, z. B. in den Loopback-Zustand, während die übrigen Busteilnehmer zur gleichen Zeit in einen Zustand versetzt werden, bei dem deren Einbaupositionen nicht erkannt werden können, z. B. in den Neutral-Zustand. Beispielsweise kann der Busteilnehmer, dessen Position erkannt werden soll, in einen Messzustand versetzt werden, bei dem der Bustransceiver eingeschaltet ist, während die übrigen Busteilnehmer in einen neutralen Zustand versetzt werden, bei dem der Bustransceiver abgeschaltet ist.

Zweckmäßigerweise kann das Verhältnis von Oszillatorfrequenz und Leitungslänge abgeleitet werden, indem die Oszillatorfrequenzen für die jeweiligen Busteilnehmer verglichen bzw. in Relation zueinander gesetzt und ihren Größen nach entsprechend den jeweiligen Leitungslängen zu den Busteilnehmern zugeordnet werden.

Neben- oder untergeordnet wird zudem ein Verfahren zur Positionserkennung eines Busteilnehmers beansprucht, welches folgende Verfahrensschritte umfasst:
- Konfigurieren eines Busteilnehmers in einen Loopback-Zustand für eine Zeitdauer T_{LB},
- Konfigurieren der übrigen Busteilnehmer in einen neutralen Zustand für eine Zeitdauer T_{NEU},
- Aktivieren des Oszillators für eine Zeitdauer T_{OS}, welche kleiner ist als die Zeitdauern T_{LB} und T_{NEU}, sowie
- Bestimmen der sich ergebenden Frequenz (F) während der Oszillator aktiv ist.

Vorzugsweise umfasst das Verfahren ferner die Verfahrensschritte Applizieren eines vom Busteilnehmer ausgelesenen Korrekturfaktors (zur Korrektur der Laufzeiten der Impulse/Signale zwischen Steuervorrichtung und Busteilnehmer aufgrund von Störungen oder Verlusten), sowie Speichern bzw. Hinterlegen des Ergebnisses z. B. auf einem Speicher der Steuervorrichtung zur späteren Auswertung.

Zweckmäßigerweise können die Verfahrensschritte für alle Busteilnehmer des Bussystems durchgeführt bzw. wiederholt werden, um die Einbaupositionen aller Busteilnehmer zu bestimmen/erkennen.

Vorzugsweise werden die gespeicherten Ergebnisse insbesondere in aufsteigender oder absteigender Reihenfolge geordnet und den jeweiligen Busteilnehmern entsprechend ihrer Leitungslängen zugeordnet, sodass deren Einbauposition entsprechend bestimmt werden kann.

Insbesondere kann es sich bei den erfindungsgemäßen Verfahren auch um ein computerimplementiertes Verfahren handeln, wobei unter "computerimplementiertes Verfahren" im Sinne der Erfindung eine Ablaufplanung oder Vorgehensweise verstanden wird, welche anhand eines Rechners verwirklicht bzw. durchgeführt wird. Der Rechner, wie z. B. ein Computer, ein Computernetzwerk, ein Steuergerät bzw. eine Steuervorrichtung, ein Mikrocontroller oder Mikroprozessor oder eine andere aus dem Stand der Technik bekannte programmierbare Steuervorrichtung, kann dabei mittels programmierbarer Rechenvorschriften Daten verarbeiten. In Bezug auf das Verfahren können dabei wesentliche Eigenschaften z. B. durch ein neues Programm, neue Programme, einen Algorithmus oder dergleichen bewirkt werden.

Neben- oder untergeordnet beansprucht die vorliegende Erfindung ein Bussystem mit Positionserkennung von Busteilnehmern, der Einbauposition insbesondere anhand eines erfindungsgemäßen Verfahrens erkannt wird. Das Bussystem umfasst hierzu eine Steuervorrichtung sowie mehrere Busteilnehmer, die jeweils an der zu erkennenden Position angeordnet sind. Die Busteilnehmer sind dabei über mindestens eine Leitung mit der Steuervorrichtung verbunden, wobei die Leitung zu dem jeweiligen Busteilnehmer eine festlegbare Leitungslänge aufweist und die Positionserkennung des Busteilnehmers erfolgt, indem die Steuervorrichtung einen Oszillator umfasst, der ein Signal über die Leitung an den jeweiligen Busteilnehmer sendet woraufhin der Busteilnehmer antwortet. Ferner ist eine Frequenzmesseinrichtung zur Bestimmung der Frequenz des Oszillators bzw. der Oszillatorfrequenz vorgesehen, wobei ein Verhältnis von Oszillatorfrequenz und Leitungslänge zur Positionserkennung herangezogen wird.

### Beschreibung der Erfindung anhand von Ausführungsbeispielen

Im Folgenden wird die Erfindung anhand von zweckmäßigen Ausführungsbeispielen näher erläutert. Es zeigen:
- Fig. 1: eine vereinfachte schematische Darstellung eines Übersichtsplan eines Bussystems, bei dem die Einbauposition der jeweiligen Busteilnehmer mittels des erfindungsgemäßen Verfahrens automatisch erkannt werden;
- Fig. 2: eine vereinfachte schematische Darstellung der Zuordnung einer Sensoradresse innerhalb des Bussystems;
- Fig. 3: eine vereinfachte schematische Darstellung einer ersten Ausgestaltung einer Steuervorrichtung und eines Busteilnehmers, dessen Einbauposition automatisch mittels des erfindungsgemäßen Verfahrens erkannt wird;
- Fig. 4: eine vereinfachte schematische Darstellung der Abhängigkeit zwischen Leitungslänge und Oszillatorfrequenz;
- Fig. 5: eine vereinfachte schematische Darstellung eines Ringoszillators innerhalb einer Ausgestaltung des erfindungsgemäßen Bussystems;
- Fig. 6: eine vereinfachte schematische Darstellung einer weiteren Ausgestaltung einer Steuervorrichtung und eines Busteilnehmers, dessen Einbauposition automatisch mittels des erfindungsgemäßen Verfahrens erkannt wird;
- Fig. 7: eine vereinfachte schematische Darstellung einer Beispielimplementierung eines DSI-3/PSI-5 Protokolls (aus dem DSI-3 Standard);
- Fig. 8: eine vereinfachte schematische Darstellung einer weiteren Ausgestaltung einer Steuervorrichtung und eines Busteilnehmers, dessen Einbauposition automatisch mittels des erfindungsgemäßen Verfahrens erkannt wird, sowie
- Fig. 9: eine vereinfachte schematische Darstellung einer Ausgestaltung einer Frequenzmesseinrichtung zur Ausführung des erfindungsgemäßen Verfahrens.

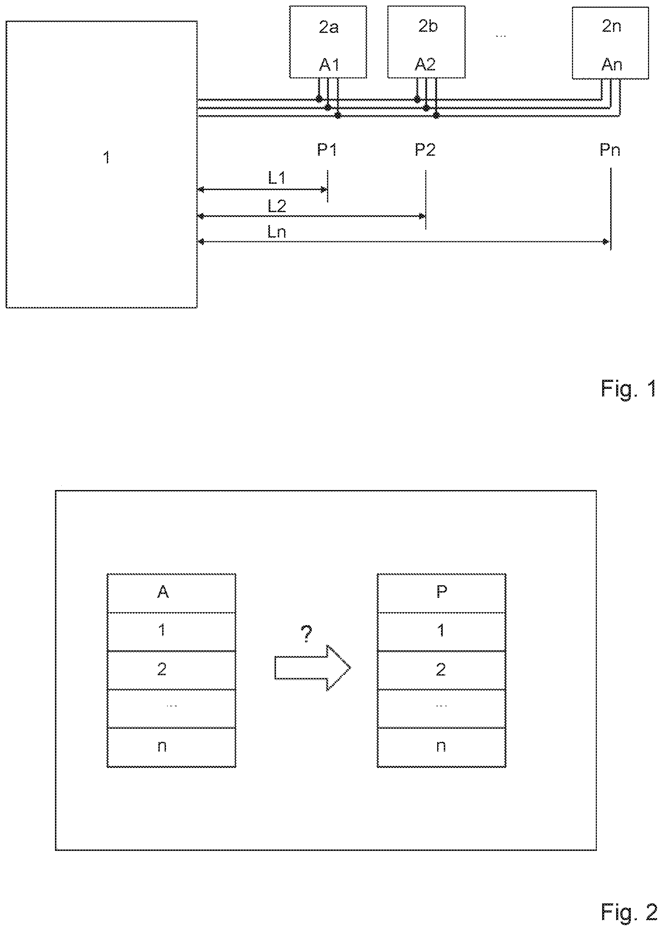

In Fig. 1 ist ein Übersichtsplan einer Anschlussschaltung bzw. eine Bussystem dargestellt, bei dem an einem gemeinsamen Versorgungs- und Kommunikationsbus einer Steuervorrichtung 1 ("shared medium") mehrere Busteilnehmer 2a, 2b ... 2n, z. B. Ultraschall-Abstandssensoren, angeschlossen werden. Die Busteilnehmer 2a, 2b, 2n sind dabei an einer bestimmten Einbauposition P1, P2, Pn angeordnet und weisen jeweils eine unterschiedliche Leitungslänge L1, L2, Ln zur Steuervorrichtung 1 auf. Beispielsweise können der Bus bzw. die Leitungen drei-drahtig ausgestaltet sein (Versorgungsspannung, Kommunikationssignal und Masse), sodass auch die Busteilnehmer bzw. (Ultraschall-Abstands-) Sensoren ebenso nur drei Anschlusspins aufweisen. Zudem werden den Busteilnehmern eindeutige Adressen A1, A2, An (z. B. Seriennummern oder dergleichen) zugewiesen, über die sie einzeln ansprechbar sind. Zur Auswertung der Sensorsignale ist steuergeräteseitig die Kenntnis über die mechanische Einbauposition des jeweiligen Sensors notwendig, z. B. vorne links, vorne rechts und dergleichen. Hierzu muss in der Steuergeräte-Software eine Zuordnung der Sensoradresse zur (a-priori nicht bekannten) tatsächlichen Position durchgeführt werden, wie in Fig. 2 vereinfacht dargestellt.

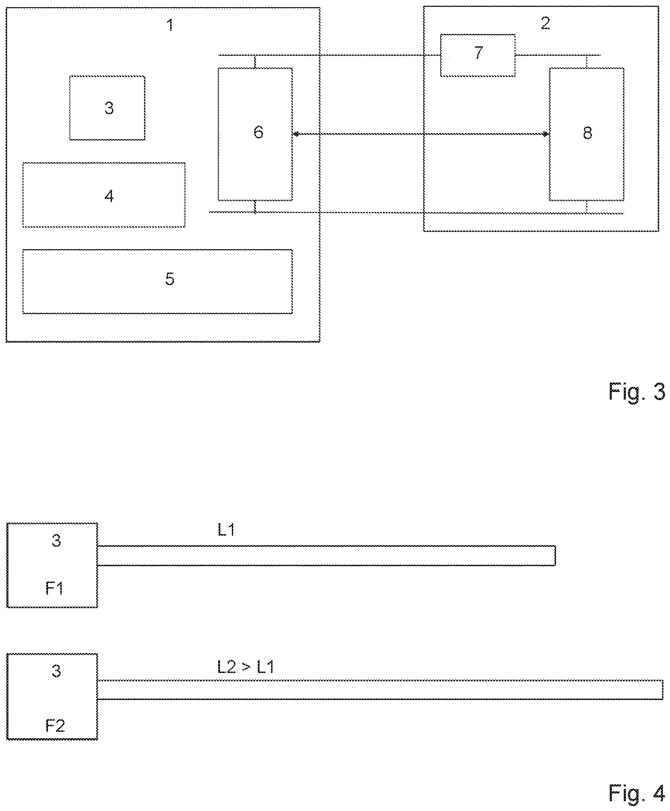

In Fig. 3 ist ein erfindungsgemäßes Bussystem dargestellt, welches eine Steuervorrichtung 1 aufweist, die einen Oszillator 3, eine Frequenzmesseinrichtung 4, eine Einrichtung zum Buszugriff bzw. einen Bustransceiver 6 sowie eine Systemsteuerung 5 umfasst. Ferner umfasst der Busteilnehmer 2 einen Filter 7 für die Versorgung und einen Bustransceiver 8. Der Oszillator 3 ist dabei derart aufgebaut, dass die für dieses Verfahren aufzubauende Signalschleife über den Bus Teil der frequenzbestimmenden Einheit ist. Höhere Leitungslängen des Busses führen dabei wegen höherer Signallaufzeiten zu niedereren Frequenzen F des Oszillators 3, wie in Fig. 4 vereinfacht dargestellt.

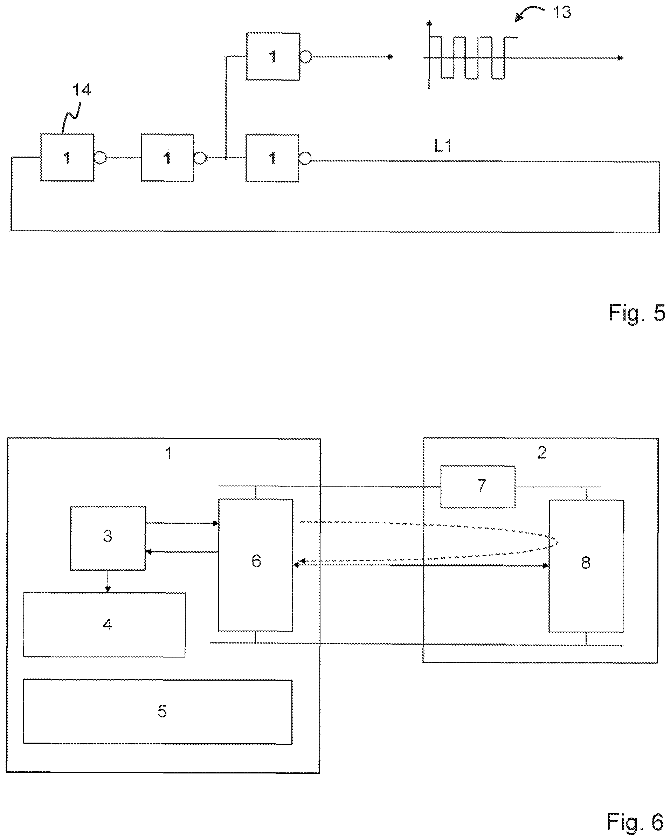

Eine Beispielimplementierung eines solchen Oszillators 3 ist die eines Ringoszillators gemäß Fig. 5. Die absolute Frequenz F des Oszillators 3 muss dabei nicht zwangsläufig ermittelt werden, entscheidend ist vielmehr der Frequenzunterschied, der durch unterschiedliche Leitungslängen L1, L2, Ln zum jeweiligen Busteilnehmer 2, 2a, 2b, 2n hervorgerufen wird. Die absoluten Oszillatorparameter müssen dabei nur für die Zeitdauer hinreichend stabil gehalten werden, die für die Messung aller Busteilnehmer 2, 2a, 2b, 2n benötigt wird (in der Regel wenige Sekunden). Die Frequenzmesseinrichtung 4 realisiert dabei die Funktion eines Frequenzmessers und ist derart hergerichtet, dass die auftretenden Frequenzunterschiede soweit erfasst werden können, dass die sich auf Grund der Leitungslängenunterschiede ergebenden Frequenzunterschiede hinreichend genau erfasst werden. Eine absolute Frequenzmessung wird dabei nicht benötigt, kann jedoch insbesondere bei ähnlich dimensionierten Leitungslängen L1, L2, Ln vorgesehen sein. Demnach können entweder die absoluten Leitungslängen L1, L2, Ln oder die zueinander relativen Leitungslängen L1, L2, Ln der einzelnen Busteilnehmer 2, 2a, 2b, 2n zur Positionserkennung herangezogen werden.

Der steuervorrichtungsseitige Bustransceiver 6 dient für die Einkoppelung des Oszillatorsignals auf den Bus, sowie für den Empfang des zurückgekoppelten Signals und dessen Eingabe in den Oszillator 3. Die Systemsteuerung 5 dient zur Konfiguration der Systembestandteile auf Steuervorrichtungsseite und über entsprechende Kommunikation über den Bus auf Busteilnehmerseite. Weiterhin dient die Systemsteuerung 5 zur Steuerung des Messablaufs und dem Auswerten des Messergebnisses.

Der Bustransceiver 8 des Busteilnehmers 2 ist derart ausgelegt, dass dieser für eine definierte bzw. festlegbare Zeitdauer T_{LB} in einen Loopback-Modus sowie für eine definierte bzw. festlegbare Zeitdauer T_{NEU} in einen neutralen Zustand geschaltet werden kann. Der Loopback-Modus (gemäß Fig. 6) dient dazu, dass für die festgelegte Zeitdauer ein auf der Leitung empfangener Impuls unmittelbar in einen entsprechenden Impuls in Gegenrichtung umgesetzt wird, d. h. ein Zustand, in dem die Einbauposition des Busteilnehmers 2 erkannt werden kann. Die Realisierung des Bustransceivers 8 und des Loopback-Modus ist abhängig vom gewählten Übertragungsprotokoll und hierbei nicht Gegenstand der Erfindung. Nach Ablauf der festgelegten Zeitdauer T_{LB} soll der Busteilnehmer 2 selbsttätig wieder in den normalen Betriebszustand zurückkehren. Der neutrale Zustand des Busteilnehmers 2 ist derart gestaltet, dass dieser für die bestimmte Zeitdauer T_{NEU} (in ähnlicher, bis übereinstimmender Größenordnung wie für den Loopback-Modus) nicht auf Signale aus dem Bus reagiert (d. h. ein Zustand in dem die Position des jeweiligen Busteilnehmers nicht erkannt werden kann), danach jedoch selbsttätig wieder in den normalen Betriebszustand zurückkehrt.

Für den Verfahrensablauf wird vorausgesetzt, dass die Busteilnehmer 2, 2a, 2b, 2n über identifizierbare Adressen (z. B. mittels Seriennummern oder dergleichen) einzeln ansprechbar sind. Verfahren zur Adressermittlung sind dabei ebenfalls protokollspezifisch, hinreichend bekannt und daher nicht Gegenstand dieses Verfahrens. Es wird zudem vorausgesetzt, dass die Busteilnehmer 2, 2a, 2b, 2n gegebenenfalls über einen auslesbaren Korrekturwert verfügen, welcher herstellungsspezifische Schwankungen derjenigen Bauteileigenschaften kompensieren kann, welche Einfluss auf den Messwert haben. Dieser Wert kann z. B. beim Fertigungstest unter definierten Bedingungen ermittelt werden.

Gemäß eines bevorzugten Verfahrensablaufs kann zunächst ein Busteilnehmer 2a (z. B. mit Adresse A1) Loopback-Zustand konfiguriert bzw. versetzt werden, während die übrigen Busteilnehmer 2b... 2n in den neutralen Zustand konfiguriert bzw. versetzt werden. Anschließend kann der Oszillators 3 für eine bestimmte Zeitdauer, welche kleiner als die Zeitdauer des Loopback-Modus T_{LB} und kleiner als die Zeitdauer des Neutralmodus T_{NEU} ist, aktiviert werden. Während der Oszillator 3 aktiv ist, kann dann sich die ergebende Frequenz F (Oszillatorfrequenz) bestimmt bzw. gemessen werden. Optional kann hierbei ein vom zu messenden Busteilnehmer 2a ausgelesener Korrekturfaktor appliziert werden, um diesen rechnerisch herauszufiltern. Ferner kann das Ergebnis zur späteren Auswertung gespeichert werden. Anschließend wird das Verfahren für alle anderen bzw. die übrigen Busteilnehmer 2b... 2n wiederholt, wobei die gespeicherten Ergebnisse, z. B. in aufsteigender oder absteigender Reihenfolge, geordnet. Die so gefundene Ordnung reflektiert dabei die physische Reihenfolge der Busteilnehmer auf dem Bus, womit diese dann den entsprechenden Positionen P1, P2, Pn bzw. Leitungslängen L1, L2, Ln zugeordnet werden können.

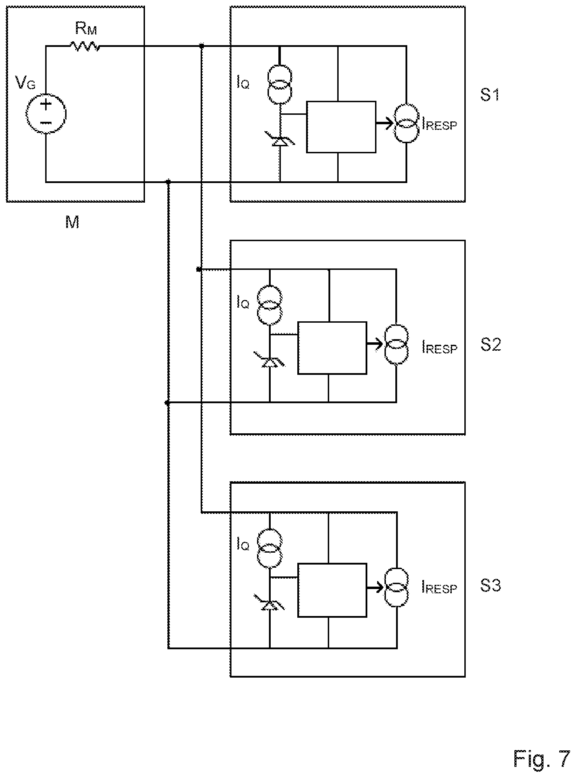

In Fig. 7 ist eine Beispielimplementierung eines DSI-3/PSI-5 Protokolls aus dem DSI-3 Standard dargestellt, mit einem Master M und drei Slaves S1-S3. Beim DSI-3 Protokoll wird in Richtung Busteilnehmer 2 eine Spannungsmodulation und in Rückrichtung eine Strommodulation genutzt. Dies erlaubt prinzipiell die gleichzeitige Übertragung in beide Richtungen, da beide Größen orthogonal, also unabhängig voneinander sind. Ein Loopback kann hier beim jeweiligen Busteilnehmer durch unmittelbare Steuerung des Rückkanals (Stromquelle I_{RESP}) aus dem Signal des Steuergeräts (Spannungshub von V_{Q}) bzw. der Steuervorrichtung 1 erfolgen.

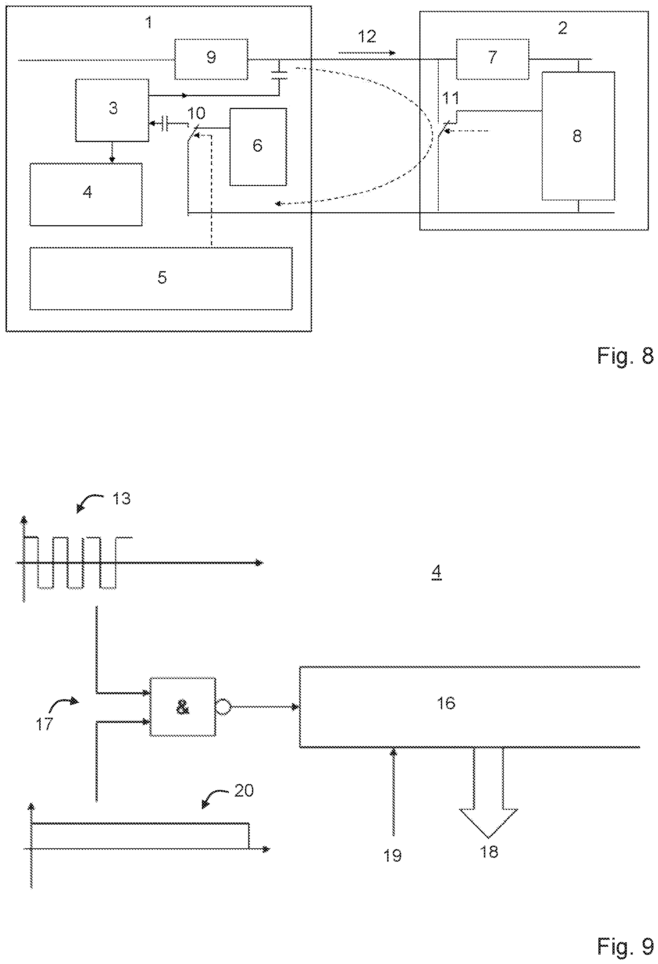

In Fig. 8 ist eine Ausgestaltung einer Modulation der Versorgungsleitung dargestellt, wobei das Oszillatorsignal mit der Versorgungsspannung des Busteilnehmers 2 bzw. der Busteilnehmer überlagert wird (DC mit überlagertem Oszillatorsignal 12), um diese anschließend mittels elektronischer Schalter bzw Schalteinrichtungen 10, 11 (Schalter "neutral" / "Loopback") über die Signalleitung des Busses zurück zu koppeln. Die Trennung von Versorgungsspannung und Signal wird mittels einfacher Kondensatoren durchgeführt; Gleichstromseitig durch (relativ kleiner) Induktivitäten.

In Fig. 9 ist ein Beispiel für eine Frequenzmesseinrichtung 4 gezeigt, bei der diese durch eine einfache Zählerschaltung 16 mit hinreichender Breite (z. B. 48 Bit) realisiert wird, indem die Zählerschaltung 16 über eine Torschaltung 17 mit dem empfangenen Pulsen des Oszillators bzw. dem Oszillatorsignal 13 beaufschlagt wird. Über den zweiten Eingang der Torschaltung 17 werden die Pulse für die Dauer der Messung (Messdauer 20) zum Zähler bzw. zur Zählerschaltung 16 hin freigegeben und darüber hinaus gesperrt. Die Zahl der innerhalb der Messdauer 20 gezählten Impulse ist ein Maß für die Oszillatorfrequenz, welche dann über die Ausgabe 18 ausgegeben werden kann. Da nur die relativen Unterschiede der Messungen untereinander eine Rolle spielen, ist die absolute Dauer der Messung unkritisch; kritisch ist nur deren Wiederholgenauigkeit über mehrere Messungen eines Messzyklus hinweg (in der Regel wenige Sekunden). Dieses Ziel kann jedoch mittels gängiger Timer/Counter-Baugruppen eines steuernden Microcontrollers oder vergleichbaren Zeitgeberschaltungen realisiert werden. Ferner ist ein Reset-Eingang bzw. Reset 19 vorgesehen, mittels dem z. B. eine (automatische) Reset-Funktion bzw. ein Zurücksetzen oder Neustarten der Frequenzmesseinrichtung 4 bewerkstelligt werden kann.

### BEZUGSZEICHENLISTE

- 1: Steuervorrichtung
- 2, 2a, 2b, 2n: Busteilnehmer
- 3: Oszillator
- 4: Frequenzmesseinrichtung
- 5: Systemsteuerung
- 6: Bustransceiver
- 7: Filter für Versorgung
- 8: Bustransceiver
- 9: Filter für Versorgung
- 10: Schalteinrichtung
- 11: Schalteinrichtung
- 12: DC mit überlagertem Oszillatorsignal
- 13: Oszillatorsignal
- 14: Inverter-Gatter
- 15: UND-Gatter
- 16: Zählerschaltung
- 17: Torschaltung
- 18: Ausgabe
- 19: Reset
- 20: Messzeit

- A1, A2, An: Adresse
- L, L1, L2, Ln: Leitungslänge
- P1, P2, Pn: Position
- F, F1, F2: Frequenz
- M: Master
- S1, S2, S3: Slave

## Patentansprüche

1. Verfahren zur Positionserkennung eines Busteilnehmers (2, 2a, 2b, 2n) eines Bussystems, bei dem
eine Steuervorrichtung (1) und mehrere Busteilnehmer (2, 2a, 2b, 2n) vorgesehen sind, wobei
die Busteilnehmer (2, 2a, 2b, 2n) jeweils an einer zu erkennenden Position (P1, P2, Pn) angeordnet und
über mindestens eine Leitung mit der Steuervorrichtung (1) verbunden sind, wobei
die Leitung zu dem jeweiligen Busteilnehmer (2, 2a, 2b, 2n) eine festlegbare Leitungslänge (L1, L2, Ln) aufweist,
**dadurch gekennzeichnet, dass**
die Positionserkennung eines Busteilnehmers (2, 2a, 2b, 2n) erfolgt, indem
die Steuervorrichtung (1) mittels eines Oszillators (3) ein Signal in das Bussystem einkoppelt und über die Leitung an den jeweiligen Busteilnehmer (2, 2a, 2b, 2n) sendet und der Busteilnehmer (2, 2a, 2b, 2n) antwortet, indem das eingekoppelte Signal vom Busteilnehmer (2, 2a, 2b, 2n) zurückgekoppelt wird, und
das Signal des Oszillators (3) mit der Versorgungsspannung des Busteilnehmers (2, 2a, 2b, 2n) überlagert in das Bussystem eingekoppelt und über eine Signalleitung des Bussystems zurückgekoppelt wird, wobei
die Frequenz des Oszillators (3) ermittelt wird, und
ein Verhältnis von Frequenz und Leitungslänge (L1, L2, Ln) zur Positionserkennung herangezogen wird.

2. Verfahren nach Anspruch 1, **dadurch gekennzeichnet, dass** es sich bei dem Busteilnehmer (2, 2a, 2b, 2n) um einen Aktor oder einen Sensor, insbesondere um einen Ultraschallsensor, handelt.

3. Verfahren nach Anspruch 1 oder 2, **dadurch gekennzeichnet, dass** die Busteilnehmer (2, 2a, 2b, 2n) jeweils festlegbare unterschiedliche Leitungslängen (P1, P2, Pn) aufweisen.

4. Verfahren nach mindestens einem der vorhergehenden Ansprüche, **dadurch gekennzeichnet, dass** es sich bei dem Oszillator (3) um einen Ringoszillator handelt.

5. Verfahren nach mindestens einem der vorhergehenden Ansprüche, **dadurch gekennzeichnet, dass** die Steuervorrichtung (1) eine Frequenzmesseinrichtung (4) mit einer Zählerschaltung (16) und einer Torschaltung (17) zum Bestimmen der Frequenz des Oszillators (3) umfasst.

6. Verfahren nach mindestens einem der vorhergehenden Ansprüche, **dadurch gekennzeichnet, dass** die Steuervorrichtung (1) und der Busteilnehmer (2, 2a, 2b, 2n) jeweils einen Bustransceiver (6, 8) zum Einkoppeln bzw. Zurückkoppeln des Signals des Oszillators (3) aufweisen.

7. Verfahren nach mindestens einem der vorhergehenden Ansprüche, **dadurch gekennzeichnet, dass** die Steuervorrichtung (1) und/oder der Busteilnehmer (2, 2a, 2b, 2n) eine Schalteinrichtung (10, 11) aufweisen, mittels der entschieden werden kann, ob ein Einkoppeln bzw. Zurückkoppeln des Signals des Oszillators (3) erfolgt oder nicht.

8. Verfahren nach mindestens einem der vorhergehenden Ansprüche, **dadurch gekennzeichnet, dass** Verhältnis von Frequenz und Leitungslänge (L1, L2, Ln) abgeleitet werden, indem die Frequenzen der jeweiligen Busteilnehmer verglichen und ihren Größen nach entsprechend den jeweiligen Leitungslängen (L1, L2, Ln) zugeordnet werden.

9. Verfahren nach mindestens einem der vorhergehenden Ansprüche, **dadurch gekennzeichnet, dass** der Busteilnehmer (2a), dessen Position erkannt werden soll, in einen Zustand versetzt wird, in dem die Position erkannt werden kann, während die übrigen Busteilnehmer (2b, 2n) in einen Zustand versetzt werden, bei dem deren Position nicht erkannt werden kann.

10. Verfahren zur Positionserkennung eines Busteilnehmers (2, 2a, 2b, 2n) eines Bussystems, insbesondere nach mindestens einem der vorhergehenden Ansprüche, **dadurch gekennzeichnet, dass** das Verfahren folgende Verfahrensschritte umfasst:
- Konfigurieren eines Busteilnehmers in einen Loopback-Zustand für eine Zeitdauer T_{LB},
- Konfigurieren der übrigen Busteilnehmer in einen neutralen Zustand für eine Zeitdauer T_{NEU},
- Aktivieren des Oszillators für eine Zeitdauer T_{OS}, welche kleiner ist als die Zeitdauern T_{LB} und T_{NEU},
- Bestimmen der sich ergebenden Frequenz während der Oszillator aktiv ist.

11. Verfahren nach mindestens einem der vorhergehenden Ansprüche, **dadurch gekennzeichnet, dass** das Verfahren ferner den Verfahrensschritt umfasst:
- Applizieren eines vom Busteilnehmer (2, 2a, 2b, 2n) ausgelesenen Korrekturfaktors, sowie
- Speichern des Ergebnisses zur späteren Auswertung.

12. Verfahren nach Anspruch 10 oder 11, **dadurch gekennzeichnet, dass** die Verfahrensschritte für alle Busteilnehmer (2, 2a, 2b, 2n) des Bussystems durchgeführt werden.

13. Verfahren nach einem der Ansprüche 11-12, **dadurch gekennzeichnet, dass** die gespeicherten Ergebnisse insbesondere in aufsteigender oder absteigender Reihenfolge geordnet und den jeweiligen Busteilnehmern (2, 2a, 2b, 2n) entsprechend ihrer Leitungslängen (L1, L2, Ln) zugeordnet werden.

14. Bussystem mit Positionserkennung von Busteilnehmern (2, 2a, 2b, 2n), insbesondere anhand eines Verfahrens nach mindestens einem der vorhergehenden Ansprüche, umfassend
eine Steuervorrichtung (1),
mehrere Busteilnehmer (2, 2a, 2b, 2n), die an einer zu erkennenden Position (P1, P2, Pn) angeordnet sind, und
die Busteilnehmer (2, 2a, 2b, 2n) über mindestens eine Leitung mit der Steuervorrichtung (1) verbunden sind, wobei
die Leitung zu dem jeweiligen Busteilnehmer (2, 2a, 2b, 2n) eine festlegbare Leitungslänge (L1, L2, Ln) aufweist,
**dadurch gekennzeichnet, dass**
die Positionserkennung eines Busteilnehmers (2, 2a, 2b, 2n) erfolgt, indem
die Steuervorrichtung (1) einen Oszillator (3) umfasst, der ein Signal in das Bussystem einkoppelt und über die Leitung an den jeweiligen Busteilnehmer (2, 2a, 2b, 2n) sendet und der Busteilnehmer (2, 2a, 2b, 2n) antwortet, indem das eingekoppelte Signal vom Busteilnehmer (2, 2a, 2b, 2n) zurückgekoppelt wird, und
das Signal des Oszillators (3) mit der Versorgungsspannung des Busteilnehmers (2, 2a, 2b, 2n) überlagert in das Bussystem eingekoppelt und über eine Signalleitung des Bussystems zurückgekoppelt wird, wobei
eine Frequenzmesseinrichtung (6) zur Bestimmung der Frequenz des Oszillators (3) vorgesehen ist, und
ein Verhältnis von Frequenz und Leitungslänge (L1, L2, Ln) zur Positionserkennung herangezogen wird.

## Claims

1. Method for detecting the position of a bus subscriber (2, 2a, 2b, 2n) of a bus system, in which
a control apparatus (1) and a plurality of bus subscribers (2, 2a, 2b, 2n) are provided, wherein
the bus subscribers (2, 2a, 2b, 2n) are each arranged at a position (P1, P2, Pn) to be detected and
are connected to the control apparatus (1) via at least one line, wherein
the line to the respective bus subscriber (2, 2a, 2b, 2n) has a definable line length (L1, L2, Ln),
**characterized in that**
the position of a bus subscriber (2, 2a, 2b, 2n) is detected by virtue of the control apparatus (1) injecting a signal into the bus system by means of an oscillator (3) and transmitting it to the respective bus subscriber (2, 2a, 2b, 2n) via the line and the bus subscriber (2, 2a, 2b, 2n) responding by feeding back the signal which has been injected, and
the signal from the oscillator (3) is injected into the bus system, in a manner superimposed with the supply voltage for the bus subscriber (2, 2a, 2b, 2n), and is fed back via a signal line of the bus system, wherein
the frequency of the oscillator (3) is determined, and
a ratio of frequency and line length (L1, L2, Ln) is used to detect the position.

2. Method according to Claim 1, **characterized in that** the bus subscriber (2, 2a, 2b, 2n) is an actuator or a sensor, in particular an ultrasonic sensor.

3. Method according to Claim 1 or 2, **characterized in that** the bus subscribers (2, 2a, 2b, 2n) each have definable different line lengths (P1, P2, Pn).

4. Method according to at least one of the preceding claims, **characterized in that** the oscillator (3) is a ring oscillator.

5. Method according to at least one of the preceding claims, **characterized in that** the control apparatus (1) comprises a frequency measuring device (4) having a counter circuit (16) and a gate circuit (17) for determining the frequency of the oscillator (3).

6. Method according to at least one of the preceding claims, **characterized in that** the control apparatus (1) and the bus subscriber (2, 2a, 2b, 2n) each have a bus transceiver (6, 8) for injecting and/or feeding back the signal from the oscillator (3).

7. Method according to at least one of the preceding claims, **characterized in that** the control apparatus (1) and/or the bus subscriber (2, 2a, 2b, 2n) has/have a switching device (10, 11) which can be used to decide whether or not the signal from the oscillator (3) is injected and/or fed back.

8. Method according to at least one of the preceding claims, **characterized in that** the ratio of frequency and line length (L1, L2, Ln) is derived by comparing the frequencies of the respective bus subscribers and assigning them according to their magnitudes in a manner corresponding to the respective line lengths (L1, L2, Ln).

9. Method according to at least one of the preceding claims, **characterized in that** the bus subscriber (2a) whose position is intended to be detected is changed to a state in which the position can be detected, whereas the other bus subscribers (2b, 2n) are changed to a state in which their position cannot be detected.

10. Method for detecting the position of a bus subscriber (2, 2a, 2b, 2n) of a bus system, in particular according to at least one of the preceding claims, **characterized in that** the method comprises the following method steps:
- configuring a bus subscriber in a loopback state for a period of time T_{LB},
- configuring the other bus subscribers in a neutral state for a period of time T_{NEU},
- activating the oscillator for a period of time Tos which is shorter than the periods of time T_{LB} and T_{NEU},
- determining the resulting frequency while the oscillator is active.

11. Method according to at least one of the preceding claims, **characterized in that** the method also comprises the method step of:
- applying a correction factor that has been read out from the bus subscriber (2, 2a, 2b, 2n), and
- storing the result for subsequent evaluation.

12. Method according to Claim 10 or 11, **characterized in that** the method steps are carried out for all bus subscribers (2, 2a, 2b, 2n) of the bus system.

13. Method according to one of Claims 11-12, **characterized in that** the stored results are arranged in ascending or descending order, in particular, and are assigned to the respective bus subscribers (2, 2a, 2b, 2n) according to their line lengths (L1, L2, Ln).

14. Bus system with detection of the position of bus subscribers (2, 2a, 2b, 2n), in particular on the basis of a method according to at least one of the preceding claims, comprising
a control apparatus (1),
a plurality of bus subscribers (2, 2a, 2b, 2n) which are arranged at a position (P1, P2, Pn) to be detected, and
the bus subscribers (2, 2a, 2b, 2n) are connected to the control apparatus (1) via at least one line, wherein
the line to the respective bus subscriber (2, 2a, 2b, 2n) has a definable line length (L1, L2, Ln),
**characterized in that**
the position of a bus subscriber (2, 2a, 2b, 2n) is detected by virtue of the control apparatus (1) comprising an oscillator (3) which injects a signal into the bus system and transmits it to the respective bus subscriber (2, 2a, 2b, 2n) via the line and the bus subscriber (2, 2a, 2b, 2n) responding by feeding back the signal which has been injected, and
the signal from the oscillator (3) is injected into the bus system, in a manner superimposed with the supply voltage for the bus subscriber (2, 2a, 2b, 2n), and is fed back via a signal line of the bus system, wherein
a frequency measuring device (6) for determining the frequency of the oscillator (3) is provided, and
a ratio of frequency and line length (L1, L2, Ln) is used to detect the position.

## Revendications

1. Procédé permettant de détecter la position d'un abonné de bus (2, 2a, 2b, 2n) d'un système de bus, dans lequel
un dispositif de commande (1) et plusieurs abonnés de bus (2, 2a, 2b, 2n) sont prévus, dans lequel
les abonnés de bus (2, 2a, 2b, 2n) sont respectivement disposés dans une position à détecter (P1, P2, Pn), et
sont reliés au dispositif de commande (1) par au moins une ligne, dans lequel
la ligne jusqu'à l'abonné de bus (2, 2a, 2b, 2n) respectif présente une longueur de ligne (L1, L2, Ln) pouvant être définie,
**caractérisé en ce que**
la détection de position d'un abonné de bus (2, 2a, 2b, 2n) est effectuée **en ce que** le dispositif de commande (1) injecte au moyen d'un oscillateur (3) un signal dans le système de bus et l'envoie sur la ligne à l'abonné de bus (2, 2a, 2b, 2n) respectif, et l'abonné de bus (2, 2a, 2b, 2n) répond **en ce que** le signal injecté est réinjecté par l'abonné de bus (2, 2a, 2b, 2n), et
le signal de l'oscillateur (3), superposé avec la tension d'alimentation de l'abonné de bus (2, 2a, 2b, 2n), est injecté dans le système de bus et est réinjecté par une ligne de signal du système de bus, dans lequel
la fréquence de l'oscillateur (3) est établie, et
un rapport entre la fréquence et la longueur de ligne, (L1, L2, Ln) est utilisé pour la détection de position.

2. Procédé selon la revendication 1, **caractérisé en ce que** l'abonné de bus (2, 2a, 2b, 2n) est un actionneur ou un capteur, en particulier un capteur à ultrasons.

3. Procédé selon la revendication 1 ou 2, **caractérisé en ce que** les abonnés de bus (2, 2a, 2b, 2n) présentent respectivement différentes longueurs de ligne (P1, P2, Pn) pouvant être définies.

4. Procédé selon au moins l'une des revendications précédentes, **caractérisé en ce que** l'oscillateur (3) est un oscillateur annulaire.

5. Procédé selon au moins l'une des revendications précédentes, **caractérisé en ce que** le dispositif de commande (1) comprend un moyen de mesure de fréquence (4) pourvu d'un circuit de comptage (16) et d'un circuit porte (17) pour déterminer la fréquence de l'oscillateur (3).

6. Procédé selon au moins l'une des revendications précédentes, **caractérisé en ce que** le dispositif de commande (1) et l'abonné de bus (2, 2a, 2b, 2n) présentent respectivement un émetteur/récepteur de bus (6, 8) pour injecter ou réinjecter le signal de l'oscillateur (3).

7. Procédé selon au moins l'une des revendications précédentes, **caractérisé en ce que** le dispositif de commande (1) et/ou l'abonné de bus (2, 2a, 2b, 2n) présente(nt) un moyen de commutation (10, 11) qui permet de décider si une injection ou une réinjection du signal de l'oscillateur (3) est effectuée ou non.

8. Procédé selon au moins l'une des revendications précédentes, **caractérisé en ce que** les rapports entre la fréquence et la longueur de ligne (L1, L2, Ln) sont dérivés **en ce que** les fréquences des abonnés de bus respectifs sont comparées et sont attribuées en fonction de leurs grandeurs de façon correspondante aux longueurs de ligne (L1, L2, Ln) respectives.

9. Procédé selon au moins l'une des revendications précédentes, **caractérisé en ce que** l'abonné de bus (2a) dont la position doit être détectée est mis dans un état dans lequel la position peut être détectée alors les autres abonnés de bus (2b, 2n) sont mis dans un état dans lequel leur position ne peut pas être détectée.

10. Procédé permettant de détecter la position d'un abonné de bus (2, 2a, 2b, 2n) d'un système de bus, en particulier selon au moins l'une des revendications précédentes, **caractérisé en ce que** le procédé comprend les étapes de procédé suivantes consistant à :
- configurer un abonné de bus dans un état de bouclage pendant une durée T_{LB},
- configurer les abonnés de bus restants dans un état neutre pendant une durée T_{NEU},
- activer l'oscillateur pendant une durée Tos qui est inférieure aux durées T_{LB} et T_{NEU},
- déterminer la fréquence résultante pendant que l'oscillateur est actif.

11. Procédé selon au moins l'une des revendications précédentes, **caractérisé en ce que** le procédé comprend en outre l'étape de procédé consistant à :
- appliquer un facteur de correction lu par l'abonné de bus (2, 2a, 2b, 2n), ainsi que
- stocker le résultat pour une évaluation ultérieure.

12. Procédé selon la revendication 10 ou 11, **caractérisé en ce que** les étapes de procédé sont effectuées pour tous les abonnés de bus (2, 2a, 2b, 2n) du système de bus.

13. Procédé selon l'une quelconque des revendications 11 à 12, **caractérisé en ce que** les résultats stockés sont triés, en particulier par ordre croissant ou décroissant, et sont attribués aux abonnés de bus (2, 2a, 2b, 2n) respectifs selon leurs longueurs de ligne (L1, L2, Ln).

14. Système de bus à détection de position d'abonnés de bus (2, 2a, 2b, 2n), en particulier à l'aide d'un procédé selon au moins l'une des revendications précédentes, comprenant
un dispositif de commande (1),
plusieurs abonnés de bus (2, 2a, 2b, 2n) qui sont disposés dans une position à détecter (P1, P2, Pn), et
les abonnés de bus (2, 2a, 2b, 2n) sont reliés au dispositif de commande (1) par au moins une ligne, dans lequel
la ligne jusqu'à l'abonné de bus (2, 2a, 2b, 2n) respectif présente une longueur de ligne (L1, L2, Ln) pouvant être définie,
**caractérisé en ce que**
la détection de position d'un abonné de bus (2, 2a, 2b, 2n) est effectuée **en ce que**
le dispositif de commande (1) comprend un oscillateur (3) qui injecte un signal dans le système de bus et l'envoie par la ligne à l'abonné de bus (2, 2a, 2b, 2n) respectif, et l'abonné de bus (2, 2a, 2b, 2n) répond **en ce que** le signal injecté est réinjecté par l'abonné de bus (2, 2a, 2b, 2n), et
le signal de l'oscillateur (3), superposé avec la tension d'alimentation de l'abonné de bus (2, 2a, 2b, 2n), est injecté dans le système de bus et est réinjecté par une ligne de signal du système de bus, dans lequel
un moyen de mesure de fréquence (6) pour déterminer la fréquence de l'oscillateur (3) est prévu, et
un rapport entre la fréquence et la longueur de ligne (L1, L2, Ln) est utilisé pour la détection de position.
